# FASCICULE DE BREVET EUROPEEN

(11) **EP 3 859 882 B1**
(45) Date de publication et mention de la délivrance du brevet: **10.08.2022**
(21) Numéro de dépôt: 20217749.9
(22) Date de dépôt: 30.12.2020
(51) Int. Cl.: H01Q 1/28, G01S 13/90, G01S 13/34, G01S 13/32, G01S 13/58, F41G 7/34, G01S 13/88, G01S 13/02

(54) **SYSTÈME RADIOÉLECTRIQUE À RÉSEAUX D'ANTENNES MULTIPLES ET À FORMES D'ONDE ADAPTATIVES**
FUNKSYSTEM MIT MEHREREN ANTENNENNETZWERKEN UND ADAPTIVEN WELLENFORMEN
RADIOELECTRIC SYSTEM WITH MULTIPLE ANTENNA NETWORKS AND WITH ADAPTIVE WAVEFORMS

(30) Priorité: 30.01.2020 FR 2000929
(43) Date de publication de la demande: 04.08.2021
(73) Titulaire: MBDA France, 92350 Le Plessis-Robinson (FR)
(72) Inventeur: BALDENSPERGER, Pierre, 92350 Le Plessis-Robinson (FR); MAGNE, François, 75017 Paris (FR)
(74) Mandataire: Gevers & Orès

(56) Documents cités:
- FR-A1- 2 879 753
- US-A- 4 675 677
- CHENMING ZHOU ET AL: "A compact positioning and velocity RF sensor for improved inertial navigation", MICROWAVE SYMPOSIUM DIGEST, 2009. MTT '09. IEEE MTT-S INTERNATIONAL, IEEE, PISCATAWAY, NJ, USA, 7 juin 2009 (2009-06-07), pages 1421-1424, XP031490795, ISBN: 978-1-4244-2803-8
- YAN JIAMING ET AL: "Vital-SAR-Imaging With a Drone-Based Hybrid Radar System", IEEE TRANSACTIONS ON MICROWAVE THEORY AND TECHNIQUES, PLENUM, USA, vol. 66, no. 12, 1 décembre 2018 (2018-12-01), pages 5852-5862, XP011699776, ISSN: 0018-9480, DOI: 10.1109/TMTT.2018.2874268 [extrait le 2018-12-10]
- SCANNAPIECO ANTONIO FULVIO ET AL: "Multi-purposes radar for remote sensing and navigation by mini and micro unmanned aerial vehicles", 2016 IEEE INTERNATIONAL GEOSCIENCE AND REMOTE SENSING SYMPOSIUM (IGARSS), IEEE, 10 juillet 2016 (2016-07-10), pages 7354-7357, XP032992042, DOI: 10.1109/IGARSS.2016.7730918
- ZAUGG E C ET AL: "Theory and Application of Motion Compensation for LFM-CW SAR", IEEE TRANSACTIONS ON GEOSCIENCE AND REMOTE SENSING, IEEE SERVICE CENTER, PISCATAWAY, NJ, US, vol. 46, no. 10, 1 octobre 2008 (2008-10-01), pages 2990-2998, XP011235710, ISSN: 0196-2892, DOI: 10.1109/TGRS.2008.921958

## Description

### DOMAINE TECHNIQUE

La présente invention concerne un système radioélectrique à réseaux d'antennes multiples et à formes d'onde adaptatives, embarqués sur un véhicule volant.

### ÉTAT DE LA TECHNIQUE

Les véhicules (ou objets) de taille réduite destinés à voler sur de longues distances (plusieurs dizaines de kilomètres voire plus) doivent pouvoir disposer d'une navigation autonome. En effet, la navigation par satellites, de type GNSS (pour « Global Navigation Satellite System » en anglais), peut être brouillée (« GNSS- denied » en anglais) et parallèlement l'emport d'une centrale à inertie suffisamment précise (de quelques mètres) s'avère incompatible pour des raisons de masse, d'encombrement et de coût.

La navigation autonome, tout temps et sur tout type de sol, requiert donc un système indépendant qui ne peut être optique ou infrarouge en raison de la mauvaise visibilité tout temps à des portées de plusieurs kilomètres.

Une solution radioélectrique exploitant la réflectivité du sol reste la seule solution pouvant être assez précise, légère et permanente. Le document FR2879753 divulgue un missile équipé d'un autodirecteur comportant une antenne d'un radar à synthèse d'ouverture présentant une direction principale de détection.

La navigation par radar à synthèse d'ouverture de type SAR (pour « Synthetic Aperture Radar » en anglais) semble convenir : le recalage de navigation s'effectue en repérant les caractéristiques du sol servant d'amers (routes, cours d'eau, bâtiments, ...). Toutefois, les amers peuvent être rares, voire absents, sur tout ou partie de la trajectoire de vol. Il en est ainsi notamment au-dessus de la mer, du désert ou d'une grande forêt.

De plus, sur de tels petits véhicules volants, la vitesse est mal connue. Or, la connaissance de la vitesse est indispensable à la construction de l'image SAR. En effet, le filtrage adapté réalisant la résolution en azimut correspond à une démodulation d'une onde modulée linéairement en fréquence f dans le temps t à l'aide de la formule F1 suivante : f=-2V²t/λR, bien connue de l'homme de l'art, dans laquelle V est le module vitesse (c'est-à-dire le module du vecteur vitesse), À est la longueur d'onde, et R est la distance d'observation.

Aussi, l'obtention d'une résolution de quelques mètres requiert une connaissance de la vitesse de l'ordre de 1%. Les radars SAR usuels, destinés à l'analyse du terrain, disposent d'un module vitesse par la centrale à inertie du porteur ou par sa navigation satellitaire (et souvent par une hybridation des deux moyens). Lorsque ce module vitesse n'est pas assez précis, l'image est floue. Un processus de focalisation peut être mis en œuvre : on applique plusieurs filtres adaptés et l'on retient celui qui présente le meilleur contraste sur l'image du sol. Dans le cas présent, l'imprécision initiale est telle que ce processus peut-être très lourd, mais surtout ne pas fonctionner si le contraste est trop faible (cas d'un sol uniforme).

Il s'ensuit que, pour remédier, d'une part à la possible rareté des amers, et d'autre part à la demande de précision de vitesse nécessaire à une bonne imagerie, il est nécessaire de mesurer le vecteur vitesse conjointement à l'imagerie SAR.

Si la théorie et les développements d'un radar SAR sont bien connus et décrits dans la littérature spécialisée, la mesure du vecteur vitesse ne fait pas l'objet d'équipements sur le marché.

La situation actuelle n'est donc pas complètement satisfaisante.

### EXPOSÉ DE L'INVENTION

La présente invention concerne un système radioélectrique embarqué sur un véhicule volant, qui a pour objet de remédier à cet inconvénient

Selon l'invention, ledit système radioélectrique comporte au moins les éléments suivants :
- un générateur de forme d'onde générant, alternativement, une onde FMCW (avec « FMCW » pour « Frequency Modulated Continuous Wave » en anglais) représentant une onde continue modulée linéairement en fréquence pour une imagerie radar et une onde CW (avec « CW » pour « Continuous Wave » en anglais) représentant une onde entretenue à une fréquence donnée pour une mesure de vecteur vitesse ;
- une chaîne d'amplification commutée vers un ensemble d'antennes d'émission ;
- l'ensemble d'antennes émission comprenant au moins une antenne latérale et une antenne ventrale ;
- un ensemble d'antennes réception comprenant au moins une antenne latérale et une antenne ventrale ;
- un ensemble de récepteurs liés à l'ensemble d'antennes de réception ; et
- un processeur de signal (ou unité centrale de traitement) mettant en œuvre des traitements de signaux FMCW reçus de la ou des antennes latérales de l'ensemble d'antennes de réception et une analyse spectrale de signaux CW reçus de la ou des antennes latérales et de la ou des antennes ventrales de l'ensemble d'antennes de réception de manière à fournir des images SAR et des composantes du vecteur vitesse dudit véhicule volant.

Avantageusement, ledit système radioélectrique est configuré pour réaliser, à partir de points remarquables des images SAR associés à une prédiction de position obtenue à partir du vecteur vitesse, un recalage du véhicule volant par rapport au sol.

Ledit système radioélectrique est donc un système de type radar, qui est embarqué sur un objet volant (ou porteur), et qui exploite la rétrodiffusion du sol pour en extraire la mesure du vecteur vitesse ainsi qu'une imagerie du sol. Ce système est notamment destiné à la navigation d'objet volant en lui permettant de repérer sa position par rapport au sol de façon autonome, c'est-à-dire en s'affranchissant de la navigation par satellite GNSS ou par centrale à inertie.

Avantageusement :
- l'ensemble d'antennes d'émission comprend deux antennes latérales orientées à +/-30° environ par rapport à la verticale au véhicule volant et l'ensemble d'antennes de réception comprend deux antennes latérales orientées à +/-30° environ par rapport à la verticale au véhicule volant ; et/ou
- l'ensemble d'antennes de réception comporte une antenne ventrale double, agencée verticalement par rapport au véhicule volant.

Dans un mode de réalisation préféré, l'ensemble d'antennes d'émission et l'ensemble d'antennes de réception sont des réseaux d'antennes patch épousant la forme du véhicule volant. De plus, avantageusement :
- les réseaux d'antennes d'émission et de réception sont découplés et sont associés par commutation aux formes d'onde FMCW pour réaliser l'imagerie SAR et à la forme d'onde CW pour la mesure de l'effet Doppler selon les axes des antennes ;
- le réseau d'antenne ventral de réception est scindé en deux sous-réseaux formant deux lobes de façon à construire des voies Σ et Δ dont le traitement fournit l'incidence du véhicule volant ; et
- les réseaux de patch présentent un diagramme de niveaux de lobes secondaires bas de manière à résister à des brouillages dans des directions de menace.

Par ailleurs, de façon avantageuse, ledit système radioélectrique est configuré pour fonctionner en séquence selon la nature du sol.

En outre, avantageusement, ledit système radioélectrique est configuré pour fonctionner dans au moins une partie de la gamme hyperfréquence SHF (pour « Special High Frequency » en anglais), et de préférence dans les bandes C, X et Ku.

Par ailleurs, de façon avantageuse, les modules hyperfréquence d'émission et de réception sont réalisés à l'aide de composants monolithiques ou de circuits intégrés monolithiques hyperfréquence MMIC en arséniure de gallium (AsGa) ou en nitrure de gallium (GaN).

En outre, avantageusement, les algorithmes de traitement du processeur de signal sont implantés sur un circuit logique programmable de type FPGA (pour « Field-Programmable Gate Array » en anglais).

Par ailleurs, de façon avantageuse, ledit système radioélectrique comporte :
- un générateur d'horloges configuré pour synchroniser au moins les formes d'onde, la numérisation et le traitement des signaux du processeur de signal ; et/ou
- un microcontrôleur configuré pour réaliser au moins certaines des fonctions suivantes : au moins une configuration, au moins un contrôle et au moins une supervision d'éléments dudit système.

Par conséquent, le système radioélectrique, décrit ci-dessus, est un système embarqué, exploitant la rétrodiffusion du sol, celle-ci étant mesurée dans plusieurs directions grâce à des réseaux d'antennes et au moyen de plusieurs formes d'onde permettant conjointement de mesurer le vecteur vitesse du véhicule volant ainsi que de construire une image du sol.

Ce système radioélectrique peut, grâce à ses réseaux d'antenne et ses formes d'onde, fournir des images SAR droite ou gauche et les composantes du vecteur vitesse du véhicule volant à partir desquels les points remarquables de l'imagerie associés à la prédiction de position obtenue par le vecteur vitesse permettent de recaler le véhicule volant par rapport au sol.

Ce système radioélectrique apporte ainsi une solution permettant le recalage de navigation par tout temps, quelle que soit la nature du sol.

### BRÈVE DESCRIPTION DES FIGURES

D'autres caractéristiques et avantages du système selon l'invention apparaîtront mieux à la lecture de la description qui suit d'un exemple de réalisation donné à titre illustratif et nullement limitatif annexé des figures suivantes.
La figure 1 est un schéma synoptique d'un mode de réalisation particulier d'un système radioélectrique.
La figure 2 est un schéma synoptique d'un générateur de forme d'onde du système radioélectrique.
La figure 3 est un exemple de séquencement de formes d'onde.
La figure 4 illustre un exemple d'agencement d'antennes d'émission sur un porteur.
La figure 5 montre un exemple de réalisation d'antennes d'émission sous forme de réseaux de patchs.
La figure 6 illustre un exemple d'agencement d'antennes de réception sur un porteur.
La figure 7 montre un exemple de réalisation d'antennes de réception sous forme de réseaux de patchs.
Les figures 8A, 8B et 8C sont différentes vues permettant d'illustrer un exemple d'agencement d'antennes d'émission sur un porteur.
Les figures 9A et 9B sont différentes vues permettant d'illustrer un exemple d'agencement d'antennes de réception sur un porteur/
La figure 10 montre des ouvertures en site et gisement d'un réseau de nxm patchs.
La figure 11 est une vue de face de lobes d'antennes ventrales.
La figure 12 est une vue latérale des lobes d'antennes ventrales.
La figure 13 est une représentation schématique montrant la vitesse relative et la fréquence Doppler sur l'un des lobes d'antenne.

### DESCRIPTION DÉTAILLÉE

La description qui suit, donnée à titre illustratif et nullement limitatif, concerne un système radioélectrique (ci-après « système 10 ») embarqué sur un véhicule (ou objet) volant, par exemple de taille réduite, appelé par la suite « porteur 20 ». Ledit système 10 peut correspondre à un système radioélectrique de navigation autonome ou à un radar de navigation à vitesse et imagerie (NAVSAR).

Le principe du système 10 repose principalement sur la conception de réseaux d'antennes dont les faisceaux sont adaptés d'une part à la couverture du terrain dont on veut faire l'imagerie, et d'autre part à la mesure de l'effet Doppler dans diverses directions pour extraire les composantes du vecteur vitesse. Conjointement, les formes d'ondes appliquées sur les faisceaux d'antennes, sont d'une part une onde FMCW, à savoir une onde continue modulée linéairement en fréquence (avec « FMCW » pour « Frequency Modulated Continuous Wave » en anglais), pour former une image du sol selon le principe connu d'un radar SAR (radar à antenne synthétique) et d'autre part une onde CW, à savoir une onde entretenue (avec « CW » pour « Continuous Wave » en anglais) d'amplitude et de fréquence constantes, servant à mesurer l'effet Doppler de la vitesse relative du porteur 20 dans les directions des faisceaux d'antennes. A partir de ces informations, un spécialiste de la navigation est capable de repérer la position du porteur par rapport au sol.

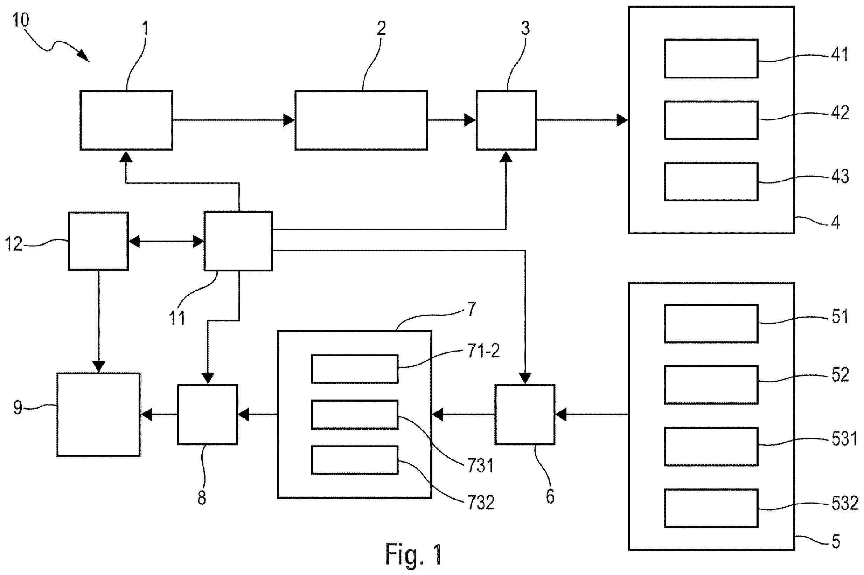

Comme représenté sur la figure 1, le système 10 comprend un générateur de forme d'onde 1 (ou synthétiseur), une chaîne d'amplification 2, un commutateur 3 (ou « switch » en anglais), un réseau 4 d'antennes d'émission, un réseau 5 d'antennes de réception, un commutateur 6 (ou « switch » en anglais), un ensemble 7 de récepteurs, un convertisseur analogique numérique 8 (CAN) multiple, et un processeur de signal 9.

Le générateur de forme d'onde 1 (ou synthétiseur) fournit, alternativement, une onde FMCW et une onde CW à la fréquence désirée.

Le choix de cette fréquence est à faire parmi les gammes C, X, Ku, en fonction des données suivantes :
- du tableau des fréquences du régulateur national ;
- de la place disponible sur le porteur ;
- de la portée et de la précision sur le vecteur vitesse telles que demandées ;
- de la résolution souhaitée de l'image ; et
- de la zone d'emploi (pluie).

A titre d'illustration, on notera que la plupart des radars SAR d'avions fonctionnent en bande X (autour de 9.3GHz). Cependant si le porteur est petit, on a intérêt à augmenter la fréquence pour disposer d'antennes plus petites à directivités égales, tout en tenant compte de la pluie qui pourra limiter la portée. En effet, si la fréquence est trop élevée (par exemple en bande K vers les 20GHz), la portée est réduite à quelques kilomètres par temps de pluie. Aussi, les paramètres du spectre de la puissance et de la taille des réseaux 4 et 5 d'antennes dépendent du porteur et de sa mission.

Le système 10 comporte également un générateur d'horloges 11 et un microcontrôleur 12.

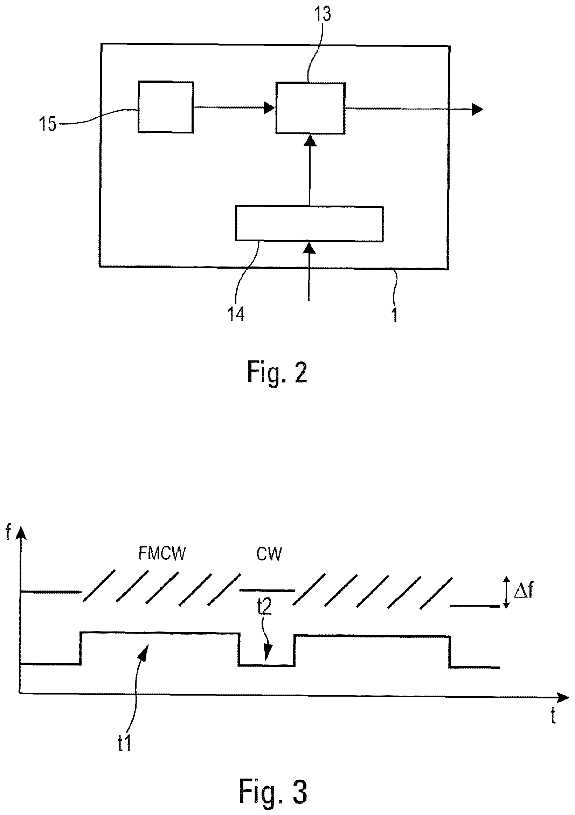

Comme représenté sur la figure 2, le générateur de forme d'onde 1 (ou synthétiseur) comporte un composant central de synthèse 13 VCO-PLL (pour « Voltage Control Oscillator - Phase Lock Loop » en anglais) dont plusieurs existent sur le marché aux fréquences choisies. La forme d'onde est pilotée par un générateur de tension 14, en « dents de scie », qui commande le composant central de synthèse 13 en FMCW (dents de scie) ou en CW (tension continue). Le générateur de tension 14 en dents de scie est lui-même piloté par le générateur d'horloges 11 (de préférence un composant du commerce) pour ce qui est du séquencement, illustré sur la figure 3, et par le microcontrôleur 12 pour ce qui est de paramètres tels que la fréquence et l'excursion de fréquence.

On notera que l'excursion de fréquence (Δf selon la figure 3) détermine la résolution en distance du système 10 (SAR). La stabilité de fréquence de l'ensemble est assurée par un cristal 15 de type TCXO (oscillateur stable en température dont de nombreux exemplaires existent sur le marché), représenté sur la figure 2. En outre, comme représenté sur la figure 3, le séquencement temps-fréquence est effectué alternativement en CW puis en FMCW. On donne, à titre d'exemple, des valeurs type de ce cadencement (t1 est par exemple compris entre 10 et 20 secondes, et t2 est par exemple compris entre 0,1 et 1 seconde) qui s'optimise en fonction des sols survolés au cours de la mission. Le recalage de navigation n'exigeant pas des mesures permanentes de fonctions SAR (FMCW) et d'effet Doppler (CW), l'alternance économise une chaîne d'émission et de réception, ainsi que des filtrages évitant les interférences. Ceci permet d'obtenir un système 10 compact et économique.

La chaîne d'amplification 2 peut comporter un amplificateur du commerce, dont la puissance de quelques watts dépend de la portée souhaitée. Il est suivi du commutateur 3 dont la mission est d'orienter le signal CW sur une antenne ventrale 43 et le signal FM/CW sur l'une des deux antennes latérales 41 et 42 précisées ci-dessous, de l'ensemble 4 d'antennes d'émission.

Le mode de réalisation préféré avec deux antennes latérales 41 et 42 permet d'aller rechercher les images de terrain les plus significatives par rapport à la trace au sol du vol. Ce mode de réalisation préféré n'est pas obligatoire, mais il donne plus de possibilités au système 10.

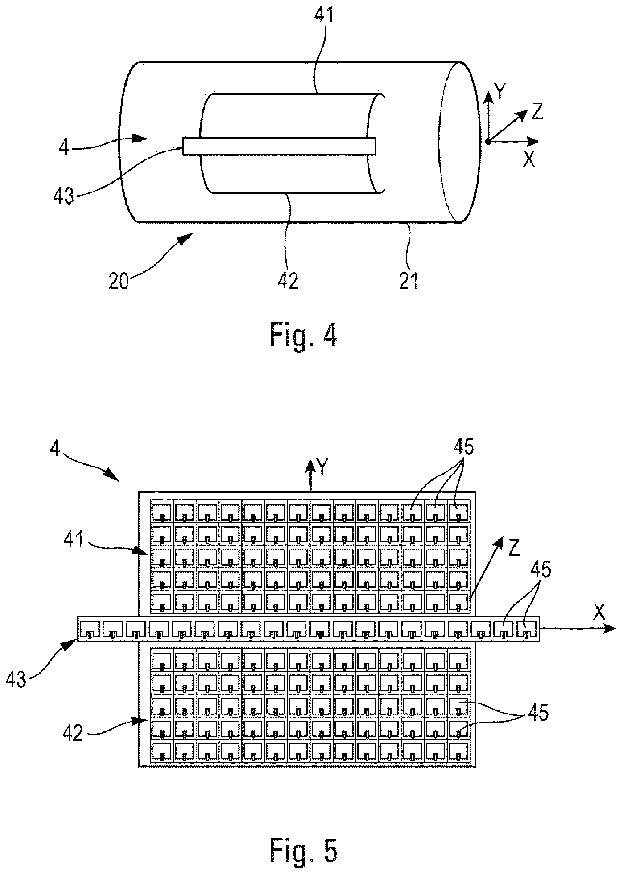

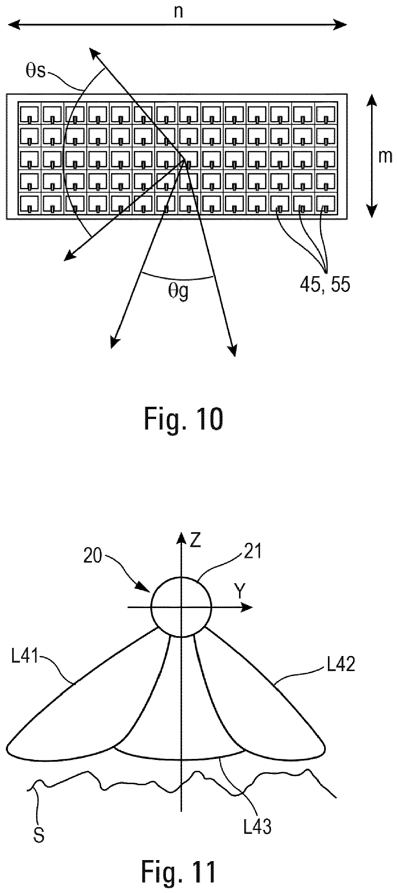

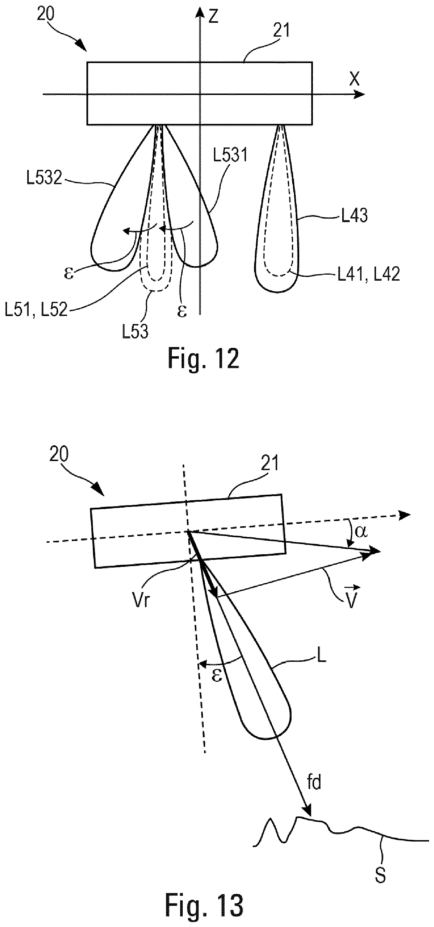

L'ensemble 4 d'antennes d'émission 41, 42 et 43 est représenté sur la figure 4. L'ensemble 4 est implanté sur le corps 21 du porteur 20. L'antenne ventrale 43 est axée longitudinalement en X et perpendiculaire à l'axe -Z. X est l'axe longitudinal du porteur 21, Z est l'axe vertical et Y est l'axe transversal (orthogonal aux axes X et Z). De chaque côté de l'antenne ventrale 43, sont disposées les antennes d'émission 41 et 42 respectivement à gauche et à droite. Chacune des antennes 41, 42 et 43 est formée d'un réseau de patchs 45 comme représenté sur la figure 5. Les exigences des ouvertures ou directivités sont représentées sur la figure 10 et en coupes verticales sur les figures 11 et 12. Selon la figure 12, les diagrammes des antennes latérales doivent couvrir au sol la distance en Y spécifiée par la mission.

Sur la figure 11, on a représenté les lobes L41, L42 et L43 des antennes d'émission 41, 42 et 43. Les lobes des antennes de réception sont masqués sur cette figure 11.

La figure 10 illustre des ouvertures en site et en gisement d'un réseau de n patchs x m patchs. La figure 10 montre des ouvertures type pour des patchs 45, 55 espacés de λ/2. A titre d'exemple, sachant qu'un degré couvre 17m à 1000m, l'ouverture en élévation ou site (θs sur la figure 10) pour couvrir 1700m à 5 000m demande une ouverture de 20°. D'après la figure 10, il faudra 90/20 soit m=5patchs environ. En ce qui concerne l'ouverture en gisement (θg sur la figure 10) de tous les réseaux d'antennes (ouverture perpendiculaire à l'axe X, figure 12), la directivité ou l'ouverture doit être aussi fine que possible, tant pour le bilan radar et la précision des mesures Doppler, que pour la maîtrise des lobes secondaires. A cet égard, un avantage des réseaux de patchs est que les lobes secondaires sont contrôlés en phase par la distance entre patchs et l'amplitude par la taille différenciée des patchs. Cette propriété permet, notamment, de mieux protéger le système 10 d'éventuels brouilleurs.

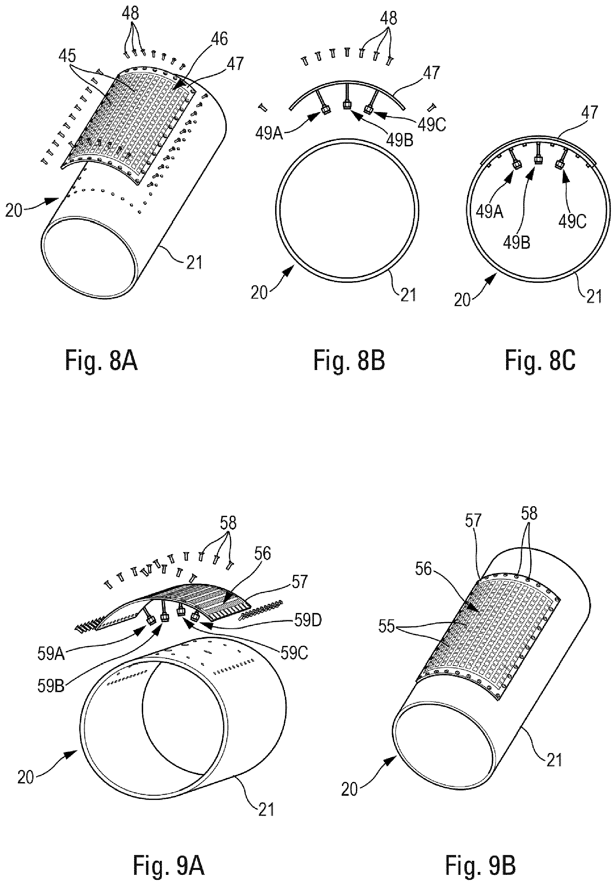

Le nombre de patchs est optimisé en fonction de la capacité du porteur 20 à les recevoir. On notera, à cet égard, que la montée en fréquence permet d'accroître le gain et la directivité. Cependant, un compromis est à faire avec l'atténuation de la pluie qui devient significative au-delà de la bande X (9-10GHz). On optimisera les paramètres des antennes en fonction du porteur 20 et de sa mission, le système 10 ayant un large champ d'application. A titre d'exemple de réalisation, le réseau de l'ensemble 4 d'antennes d'émission peut être réalisé en un seul circuit imprimé 46 brasé sur une plaque métallique 47 préformée, comme représenté sur les figures 8A, 8B et 8C. Cette plaque métallique 47 est vissée sur le corps 21 du porteur 20 (à l'aide de vis 48), les trois connecteurs 49A, 49B et 49C (relatifs aux trois réseaux) traversant le corps 21 du porteur 20.

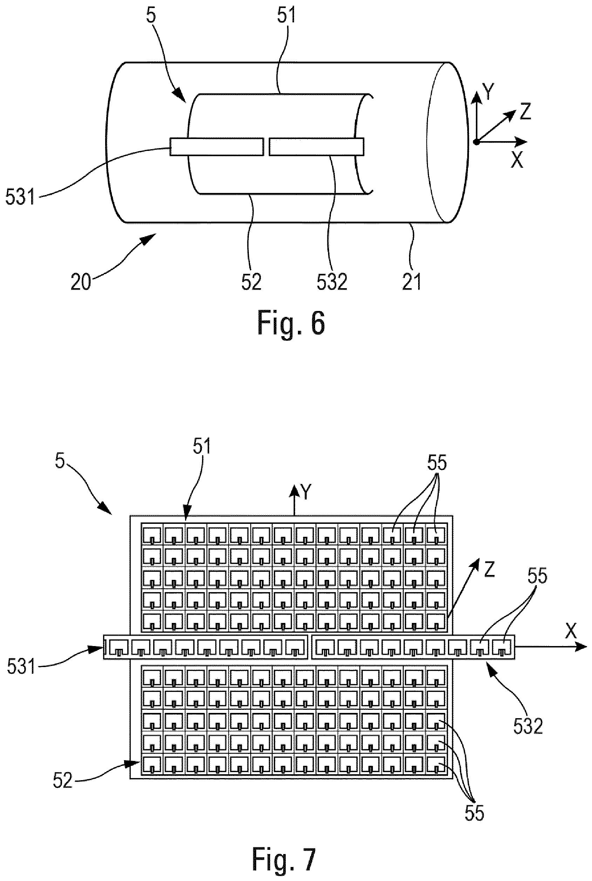

L'ensemble 5 d'antennes de réception 51, 52, 531 et 532 est représenté sur la figure 6. L'ensemble 5 est implanté sur le corps 21 du porteur 20. L'antenne ventrale est constituée de deux sous-réseaux contigus 531 et 532 axés longitudinalement en X et perpendiculaires à l'axe -Z. Les deux sous-réseaux 531 et 532 produisent respectivement un lobe L531 avant et un lobe L532 arrière, comme représenté sur la figure 12, qui sont écartés d'un angle ε (figures 12 et 13) de la perpendiculaire au porteur, comme représenté sur la figure 13. La somme de ces deux sous-réseaux 531 et 532 fournit un lobe L53 de somme verticale (figure 12), appelé Σ. En effectuant la différence des lobes L531 et L532, différence nommée Δ, on peut réaliser dans le processeur de signal 9 un « monopulse d'amplitude ». Ce traitement permet de mesurer la direction de la verticale du sol, c'est-à-dire l'angle α d'incidence du porteur 21, comme représenté sur la figure 13. Selon la théorie du « monopulse », on a α=Arctg(Δ/Σ) (formule F2). Une telle mesure est parfois nécessaire pour obtenir les composantes du vecteur vitesse dans le repère du sol. En effet, les lobes d'antennes mesurent les effets Doppler, donc les vitesses relatives sur les axes des antennes dans le repère du porteur. Il reste à projeter ces valeurs dans le repère du sol, selon une opération mathématique classique opérée par le processeur de signal 9.

Sur la figure 12, on a représenté les lobes L532, L531 et L43 des antennes ventrales 532, 531 et 43 en trait continu, et les lobes L51, L52, L41 et L42 des antennes latérales 51, 52, 41 et 42 en traits interrompus.

De chaque côté de l'antenne ventrale 531, 532, on dispose les antennes de réception 51 et 52 respectivement gauche et droite. Les diagrammes des antennes répondent aux mêmes critères et considérations que ceux exposés précédemment pour les antennes d'émission.

A titre d'exemple, la même réalisation que pour l'émission peut être effectuée, comme représenté sur les figures 9A et 9B. A la différence avec les réseaux émission, on dispose, en réception, de quatre connecteurs 59A, 59B, 59C et 59D correspondant aux quatre réseaux d'antennes (au lieu de trois), puisqu'il y a deux sous-réseaux d'antennes ventrales au lieu d'un seul à l'émission. Plus précisément, le réseau de l'ensemble 5 d'antennes de réception peut être réalisé en un seul circuit imprimé 56 brasé sur une plaque métallique 57 préformée, comme représenté sur les figures 9A et 9B. Cette plaque métallique 57 est vissée sur le corps 21 du porteur 20 (à l'aide de vis 58), les quatre connecteurs 59A, 59B, 59C et 49D (relatifs aux quatre réseaux) traversant le corps 21 du porteur 20.

Pour une bonne sensibilité, les réseaux d'antennes d'émission et de réception doivent être suffisamment écartés pour être suffisamment découplés. De plus, on associe, au plus près des connecteurs de sortie des antennes, des amplificateurs faible bruit (LNA), voire des filtres passe-bande si l'environnement radioélectrique l'exige.

Chaque sortie d'antenne (filtrée, amplifiée) est, comme représenté sur la figure 2, dirigée vers l'un des récepteurs 71-2, 731, 732 de l'ensemble 7 représenté sur la figure 2. Les sorties des antennes latérales 51 et 52 sont commutées par le commutateur 6 vers le récepteur 71-2 selon l'imagerie (droite ou gauche) à effectuer. Les sorties des antennes ventrales 531 et 532 sont connectées aux récepteurs 731 et 732. Les récepteurs ont pour fonction de transposer le signal hyperfréquence en fréquence intermédiaire (FI) amplifiée et filtrée de façon à pouvoir le numériser et le traiter dans le processeur de signal 9. Ces chaînes de réception, dans ces gammes de fréquences, sont bien connues. Elles sont constituées d'un amplificateur faible bruit LNA (pour « Low Noise Amplifier » en anglais), d'un mélangeur (préférablement I/Q, en phase et en quadrature), l'oscillateur local de ce mélangeur provenant du synthétiseur (ou générateur de forme d'onde 1). Le mélangeur est suivi d'un filtre passe-bas et d'un ou plusieurs amplificateurs. Ces divers composants existent dans le commerce.

Comme représenté sur la figure 1, les sorties de l'ensemble 7 de récepteurs sont numérisées par les codeurs analogique/numérique 8 CAN dont la fréquence d'échantillonnage est plus de 2.5 fois la fréquence intermédiaire (Théorème de Shannon) et dont la dynamique englobe celle de la réflectivité du sol (environ 30dB) et celle du bilan radar fonction de la portée (environ 30dB). La cadence d'échantillonnage est réglée par le générateur d'horloges 11. A titre d'exemple, un «CAN AD9653 Quad, 16bits, 125Msps» peut convenir à de nombreuses configurations, car il dispose d'une grande dynamique. Il présente aussi l'avantage, pour des systèmes compacts, de coder 4 voies en parallèle en un seul composant. D'autres codeurs CAN de performances équivalentes ou supérieures peuvent être utilisés.

Les signaux numérisés sont ensuite injectés dans le processeur de signal 9.

Deux types de traitements (suite d'algorithmes) sont appliqués et programmés dans le processeur de signal 9, selon la forme d'onde utilisée.

En période d'émission FMCW (figure 3), le processeur de signal 9 effectue, de façon usuelle, un traitement SAR connu. Le processeur de signal 9 extrait une image du sol, constituée de pixels d'intensités dépendant de la réflectivité du sol, et de résolution de l'ordre d'un ou de quelques mètres. La dimension de l'image est de l'ordre de 2km x 2km. Elle dépend de la durée de la période d'émission, de l'altitude du porteur et de l'ouverture en site de l'antenne latérale. Cette image permet au système 10 de repérer les amers de recalage.

En période d'émission CW, le processeur de signal 9 effectue une analyse spectrale sur chacune des antennes de réception. Les effets Doppler moyens, sur chaque lobe d'antenne L (figure 13), répondent chacun à la formule F3 : fd=-2Vr/À, dans laquelle λ est la longueur d'onde et Vr est la projection du vecteur vitesse sur l'axe de l'antenne. Les projections Vr correspondent aux vitesses relatives du porteur 20 par rapport au sol S, dans chaque direction de l'axe de ces d'antennes.

Le module V de la vitesse (figure 13) répond à la formule F4 : V=fd*λ/2sin(α+ε) dans laquelle fd est la fréquence Doppler mesurée, λ est la longueur d'onde, α est l'incidence (angle entre l'axe du porteur 21 et le vecteur vitesse), et ε est le dépointage de l'axe de l'antenne considérée avec le porteur 21.

Selon la formule F4 et l'analyse spectrale fournissant fd (fréquence Doppler), on obtient le module de vitesse ainsi que l'incidence du porteur avec sa trajectoire. La formule F3 fournit autant de vitesses relatives que d'antennes, permettant ainsi de reconstruire le vecteur vitesse par ses composantes sur les axes des antennes. L'analyse spectrale peut être réalisée par un algorithme de transformation de Fourier rapide FFT (pour « Fast Fourier Transform » en anglais), qui est une fonction généralement programmée sur les FPGA. La précision obtenue sur chaque composante est proportionnelle à la largeur du spectre obtenu par la transformation FFT. Plus le lobe d'antenne est étroit, moins le spectre est étalé et plus la mesure de vitesse sera précise. La figure 13 illustre la déviation d'un lobe selon l'incidence du porteur et sa fréquence Doppler associée.

On indique, ci-après, des paramètres qui permettent d'optimiser les performances relatives à la précision du système 10. Selon la théorie de l'estimation, l'écart type optimal σfd de la mesure Doppler suit la formule F5 : σfd=kθ/√2S/B dans laquelle S/B est le rapport signal sur bruit, θ est la largeur du lobe d'antenne et k=2Vr/À. La précision de la mesure de V dépend donc de la place disponible longitudinalement sur le porteur qui permet d'affiner θ, du choix de la fréquence, du bilan radar, et de l'estimateur du centre du spectre Doppler. Ces paramètres sont choisis en fonction du porteur et de sa mission ainsi que des contraintes imposées par le porteur (dimensions, puissance, consommation, prix).

La mise en œuvre des algorithmes s'effectue, préférablement, sur des circuits logiques programmables de type FPGA (pour « Field-Programmable Gate Array » en anglais). Une large gamme de circuits FPGA existe sur le marché. Le choix du type de circuit FPGA par le spécialiste du signal est fait selon sa familiarité avec les fonctions implantées et les outils de programmation du producteur de circuits FPGA.

Comme représenté sur la figure 1, le système 10 est configuré et supervisé par le microcontrôleur 12, de préférence du commerce. La configuration consiste à fixer les paramètres optimaux pour la mission du porteur. Ainsi, le microcontrôleur 12 fixe la séquence de formes d'onde de la figure 3, les durées des modes FMCW et CW, les fréquences CW, et les excursions de fréquence Δf du mode FMCW. A ces fins, les commandes sont envoyées au générateur d'horloges 11 qui fournit le séquencement des modes FMCW et CW, et parallèlement au générateur de tension 14 (figure 2) qui fournit, respectivement, au composant 13 VCO-PLL une tension en dents de scie ou une tension continue. Le générateur d'horloges 11 (de préférence du commerce) fournit, de plus, les instants de commande des commutateurs de façon synchrone avec la séquence des modes de formes d'onde. Le générateur d'horloges 11 commande également le rythme d'échantillonnage du convertisseur 8 et du processeur de signal 9.

Le microcontrôleur 12 assure, de plus, la supervision du système 10, notamment avant la mission et après la configuration. La supervision consiste à vérifier que le système 10 fonctionne conformément à sa programmation. A cette fin, le microcontrôleur 12 effectue une mise en route de séquences d'émission et contrôle le fonctionnement des différents sous-ensembles (niveaux et cadences). Par exemple, on applique un couplage entre les antennes d'émission et de réception, et on teste les réponses du processeur de signal 9. D'autres procédures de test peuvent être appliquées. Enfin, le microcontrôleur 12 vérifie la communication du processeur de signal 9 avec le système de navigation du porteur.

Ledit système 10 qui exploite la rétrodiffusion du sol pour extraite une imagerie du sol ainsi que le vecteur vitesse dans le but d'effectuer un recalage de navigation tout temps et tout terrain, peut représenter un système radioélectrique de navigation autonome.

Le système 10, tel que décrit ci-dessus, présente ainsi de nombreux avantages.

En premier lieu, en l'absence de possibilité de navigation par les systèmes de navigation par satellites (type GNSS), le système 10 permet un positionnement du porteur par rapport au sol survolé avec une précision de quelques mètres.

Par rapport à une centrale à inertie performante, le système 10 est plus précis, beaucoup moins lourd et beaucoup moins cher. En effet, une centrale à inertie équipant un avion de ligne transocéanique est typiquement affectée d'une dérive de son estimation de position de l'ordre du NM/h (nautique par heure). Le coût d'une telle centrale à inertie peut se chiffrer en centaine de milliers d'euros, un système 10 est d'un ordre de grandeur inférieur.

Par ailleurs, le système 10 présente d'autres avantages, et notamment les avantages suivants :
- précision : l'association imagerie SAR et vecteur vitesse permet une précision de positionnement au sol de l'ordre de quelques mètres ;
- disponibilité : le système 10 permet une navigation tout temps et fonctionne quel que soit le terrain ou la mer et son état ;
- souplesse selon les missions : la séquence temps-fréquence est adaptable en fonction de la route (programmée à l'avance) du porteur. Au-dessus de la mer ou du désert par exemple on sera en mode CW, tandis qu'au-dessus d'un sol contenant de l'information on passera en mode FMCW plus précis ;
- compacité : la simplicité de l'électronique permet une intégration dans quelques litres et les antennes patch sont de quelques millimètres d'épaisseur sur le corps du porteur ne modifiant pas son aérodynamisme ;
- consommation : les bons bilans radar obtenus grâce aux émissions continues, au gain des antennes et aux temps d'intégration ne demandent que quelques watts d'émission. L'utilisation des derniers circuits intégrés monolithiques hyperfréquence MMIC (pour « Microwave Monolithic Integrated Circuits » en anglais) en nitrure de gallium GaN (pour « Galliun Nitride » en anglais) procure un rendement de 20 à 30% ;
- antibrouillage : la protection contre le brouillage est assurée en premier lieu par l'étalement spectral visible sur la figure 3 et conjointement par la directivité des antennes. En effet, un avantage des réseaux de patchs est que les lobes secondaires sont contrôlés en phase par la distance entre patchs et l'amplitude par la taille des patchs ;
- technologie existant sur le marché : tous les composants cités dans la description détaillée existent dans les fréquences où le système 10 peut être appliqué ;
- fiabilité : il est bien connu que le temps moyen entre pannes MTBF (pour « Mean Time Between Failure » en anglais) des circuits MMIC est très élevé ; et
- diversité des applications.

## Revendications

1. Système radioélectrique, ledit système radioélectrique (10) étant embarqué sur un véhicule volant (20),
**caractérisé en ce qu'**il comporte au moins les éléments suivants :
- un générateur de forme d'onde (1) générant, alternativement, une onde FMCW représentant une onde continue modulée linéairement en fréquence pour une imagerie radar et une onde CW représentant une onde entretenue à une fréquence donnée pour une mesure de vecteur vitesse ;
- une chaîne d'amplification (2) commutée vers un ensemble (4) d'antennes d'émission (41, 42, 43) ;
- l'ensemble (4) d'antennes émission (41, 42, 43) comprenant au moins une antenne latérale (41, 42) et une antenne ventrale (43) ;
- un ensemble (5) d'antennes de réception (51, 52, 531, 532) comprenant au moins une antenne latérale (51, 52) et une antenne ventrale (531, 532) ;
- un ensemble (7) de récepteurs (71-2, 731, 732) liés à l'ensemble (5) d'antennes de réception (51, 52, 531, 532) ; et
- un processeur de signal (9) mettant en œuvre des traitements de signaux FMCW reçus de la ou des antennes latérales (51, 52) de l'ensemble (5) d'antennes de réception (51, 52, 531, 532) et une analyse spectrale de signaux CW reçus de la ou des antennes latérales (51, 52) et de la ou des antennes ventrales (531, 532) de l'ensemble (5) d'antennes de réception (51, 52, 531, 532) de manière à fournir des images SAR et des composantes du vecteur vitesse dudit véhicule volant (20).

2. Système selon la revendication 1,
**caractérisé en ce que** l'ensemble (4) d'antennes d'émission comprend deux antennes latérales (41, 42) orientées à +/-30° environ par rapport à la verticale (Z) au véhicule volant (20) et **en ce que** l'ensemble (5) d'antennes de réception comprend deux antennes latérales (51, 52) orientées à +/-30° environ par rapport à la verticale (Z) au véhicule volant (20).

3. Système selon l'une des revendications 1 et 2,
**caractérisé en ce que** l'ensemble (5) d'antennes de réception comporte une antenne ventrale (531, 532) double, agencée verticalement par rapport au véhicule volant (20).

4. Système selon l'une des revendications 1 à 3,
**caractérisé en ce que** l'ensemble (4) d'antennes d'émission et l'ensemble (5) d'antennes de réception sont des réseaux d'antennes patch (45, 55) épousant la forme du véhicule volant (20).

5. Système selon la revendication 4,
**caractérisé en ce que** les réseaux d'antennes d'émission et de réception sont découplés et sont associés par commutation aux formes d'onde FMCW pour réaliser l'imagerie SAR et à la forme d'onde CW pour la mesure de l'effet Doppler selon les axes des antennes.

6. Système selon l'une des revendications 4 et 5,
**caractérisé en ce que** le réseau d'antenne ventral de réception est scindé en deux sous-réseaux (531, 532) formant deux lobes (L531, L532) de façon à construire des voies Σ et Δ dont le traitement fournit l'incidence (a) du véhicule volant (20).

7. Système selon l'une quelconque des revendications 4 à 6,
**caractérisé en ce que** les réseaux de patch présentent un diagramme de niveaux de lobes secondaires bas de manière à résister à des brouillages dans des directions de menace.

8. Système selon l'une quelconque des revendications précédentes, **caractérisé en ce qu'**il est configuré pour fonctionner en séquence selon la nature du sol.

9. Système selon l'une quelconque des revendications précédentes, **caractérisé en ce qu'**il est configuré pour fonctionner dans au moins une partie de la gamme hyperfréquence SHF.

10. Système selon la revendication 9,
**caractérisé en ce qu'**il est configuré pour fonctionner dans les bandes C, X et Ku.

11. Système selon l'une des revendications 9 et 10,
**caractérisé en ce que** les modules hyperfréquence d'émission et de réception sont réalisés à l'aide de composants monolithiques ou de circuits intégrés monolithiques hyperfréquence MMIC en arséniure de gallium ou en nitrure de gallium.

12. Système selon l'une quelconque des revendications précédentes, **caractérisé en ce que** les algorithmes de traitement du processeur de signal (9) sont implantés sur un circuit logique programmable de type FPGA.

13. Système selon l'une quelconque des revendications précédentes, **caractérisé en ce qu'**il comporte un générateur d'horloges (11) configuré pour synchroniser au moins les formes d'onde, la numérisation et le traitement des signaux du processeur de signal (9).

14. Système selon l'une quelconque des revendications précédentes, **caractérisé en ce qu'**il comporte un microcontrôleur (12) configuré pour réaliser au moins certaines des fonctions suivantes : au moins une configuration, au moins un contrôle et au moins une supervision d'éléments dudit système (10).

15. Système selon l'une quelconque des revendications précédentes, **caractérisé en ce qu'**il est configuré pour réaliser, à partir de points remarquables des images SAR associés à une prédiction de position obtenue à partir du vecteur vitesse, un recalage du véhicule volant (20) par rapport au sol (S).

## Patentansprüche

1. Funksystem, wobei das Funksystem (10) an Bord eines Fluggeräts (20) integriert ist, **dadurch gekennzeichnet, dass** es mindestens die folgenden Elemente umfasst:
- einen Wellenformgenerator (1), der abwechselnd eine FMCW-Welle, die eine linear frequenzmodulierte Dauerstrichwelle für eine Radarbildgebung darstellt, und eine CW-Welle, die eine auf einer gegebenen Frequenz gehaltene Welle für eine Messung des Geschwindigkeitsvektors darstellt, erzeugt;
- eine Verstärkungskette (2), die zu einer Gruppe (4) von Sendeantennen (41, 42, 43) geschaltet ist;
- wobei die Gruppe (4) von Sendeantennen (41, 42, 43) mindestens eine laterale Antenne (41, 42) und eine ventrale Antenne (43) umfasst;
- eine Gruppe (5) von Empfangsantennen (51, 52, 531, 532), die mindestens eine laterale Antenne (51, 52) und eine ventrale Antenne (531, 532) umfasst;
- eine Gruppe (7) von Empfängern (71-2, 731, 732), die mit der Gruppe (5) von Empfangsantennen (51, 52, 531, 532) verbunden sind; und
- einen Signalprozessor (9), der Verarbeitungen von FMCW-Signalen, die von der oder den lateralen Antennen (51, 52) der Gruppe (5) von Empfangsantennen (51, 52, 531, 532) empfangen werden, und eine Spektralanalyse von CW-Signale, die von der oder den lateralen Antennen (51, 52) und von der oder den ventralen Antennen (531, 532) der Gruppe (5) von Empfangsantennen (51, 52, 531, 532) empfangen werden, durchführt, um SAR-Bilder und Komponenten des Geschwindigkeitsvektors des Fluggeräts (20) zu liefern.

2. System nach Anspruch 1,
**dadurch gekennzeichnet, dass** die Gruppe (4) von Sendeantennen zwei laterale Antennen (41, 42) umfasst, die in Bezug auf die Vertikale (Z) auf etwa +/-30° am Fluggerät (20) ausgerichtet sind, und dadurch, dass die Gruppe (5) von Empfangsantennen zwei laterale Antennen (51, 52) umfasst, die in Bezug auf die Vertikale (Z) auf etwa +/-30° am Fluggerät (20) ausgerichtet sind.

3. System nach einem der Ansprüche 1 und 2,
**dadurch gekennzeichnet, dass** die Gruppe (5) von Empfangsantennen eine ventrale Doppelantenne (531, 532) umfasst, die in Bezug auf das Fluggerät (20) vertikal angeordnet ist.

4. System nach einem der Ansprüche 1 bis 3,
**dadurch gekennzeichnet, dass** es sich bei der Gruppe (4) von Sendeantennen und der Gruppe (5) von Empfangsantennen um Patchantennen-Netzwerke (45, 55) handelt, die sich der Form des Fluggeräts (20) anpassen.

5. System nach Anspruch 4,
**dadurch gekennzeichnet, dass** das Sende- und das Empfangsantennen-Netzwerk entkoppelt sind und durch Schalten mit den FMCW-Wellenformen, um die SAR-Bildgebung auszuführen, und mit der CW-Wellenform zur Messung des Doppler-Effekts entlang den Achsen der Antennen verknüpft werden.

6. System nach einem der Ansprüche 4 und 5,
**dadurch gekennzeichnet, dass** das ventrale Empfangsantennen-Netzwerk in zwei Teilnetzwerke (531, 532) geteilt ist, die zwei Keulen (L531, L532) bilden, um Kanäle Σ und Δ zu bilden, deren Verarbeitung den Einfallswinkel (a) des Fluggeräts (20) liefert.

7. System nach einem der Ansprüche 4 bis 6,
**dadurch gekennzeichnet, dass** die Patch-Netzwerke ein Diagramm niedriger Nebenkeulenpegel aufweisen, um funktechnischen Störungen in Gefahrenrichtungen zu widerstehen.

8. System nach einem der vorstehenden Ansprüche,
**dadurch gekennzeichnet, dass** es dafür ausgelegt ist, je nach Bodenbeschaffenheit sequentiell zu arbeiten.

9. System nach einem der vorstehenden Ansprüche,
**dadurch gekennzeichnet, dass** es dafür ausgelegt ist, in mindestens einem Teil des SHF-Superhochfrequenzbereichs zu arbeiten.

10. System nach Anspruch 9,
**dadurch gekennzeichnet, dass** es dafür ausgelegt ist, im C-, X- und Ku-Band zu arbeiten.

11. System nach einem der Ansprüche 9 und 10,
**dadurch gekennzeichnet, dass** die Superhochfrequenz-Sende- und Empfangsmodule mithilfe von monolithischen Bauteilen oder monolithischen integrierten Superhochfrequenz-MMIC-Schaltungen aus Galliumarsenid oder aus Galliumnitrid hergestellt sind.

12. System nach einem der vorstehenden Ansprüche,
**dadurch gekennzeichnet, dass** die Verarbeitungsalgorithmen des Signalprozessors (9) in einer programmierbaren logischen Schaltung vom Typ FPGA integriert sind.

13. System nach einem der vorstehenden Ansprüche,
**dadurch gekennzeichnet, dass** es einen Taktgenerator (11) umfasst, der dafür ausgelegt ist, mindestens die Wellenformen, die Digitalisierung und die Verarbeitung der Signale des Signalprozessors (9) zu synchronisieren.

14. System nach einem der vorstehenden Ansprüche,
**dadurch gekennzeichnet, dass** es eine Mikrosteuerung (12) umfasst, die dafür ausgelegt ist, mindestens bestimmte der folgenden Funktionen auszuführen: mindestens eine Konfiguration, mindestens eine Steuerung und mindestens eine Überwachung von Elementen des Systems (10).

15. System nach einem der vorstehenden Ansprüche,
**dadurch gekennzeichnet, dass** es dafür ausgelegt ist, anhand von markanten Punkten in den SAR-Bildern, verknüpft mit einer anhand des Geschwindigkeitsvektors erhaltenen Positionsvorhersage, eine Neuausrichtung des Fluggeräts (20) in Bezug auf den Boden (S) auszuführen.

## Claims

1. A radio system, said radio system (10) being embarked on an airborne vehicle (20),
**characterised in that** it comprises at least the following elements:
- a waveform generator (1) generating, alternatively, an FMCW wave representing a linearly frequency-modulated continuous wave for a radar imaging and a CW wave representing a wave kept at a given frequency for measuring a velocity vector;
- an amplification chain (2) switched towards a set (4) of transmit antennas (41, 42, 43);
- the set (4) of transmit antennas (41, 42, 43) comprising at least one lateral antenna (41, 42) and one ventral antenna (43);
- a set (5) of receive antennas (51, 52, 531, 532) comprising at least one lateral antenna (51, 52) and one ventral antenna (531, 532);
- a set (7) of receivers (71-2, 731, 732) linked to the set (5) of receive antennas (51, 52, 531, 532); and
- a signal processor (9) implementing processing operations on FMCW signals received from the one or more lateral antennas (51, 52) of the set (5) of receive antennas (51, 52, 531, 532) and spectrally analysing CW signals received from the one or more lateral antennas (51, 52) and from the one or more ventral antennas (531, 532) of the set (5) of receive antennas (51, 52, 531, 532) so as to supply SAR images and components of the velocity vector of said airborne vehicle (20).

2. The system according to claim 1,
**characterised in that** the set (4) of transmit antennas comprises two lateral antennas (41, 42) oriented at approximately +/-30° with respect to the vertical (Z) to the airborne vehicle (20) and **in that** the set (5) of receive antennas comprises two lateral antennas (51, 52) oriented at approximately +/-30° with respect to the vertical (Z) to the airborne vehicle (20).

3. The system according to any of claims 1 and 2,
**characterised in that** the set (5) of receive antennas comprises a double ventral antenna (531, 532), arranged vertically with respect to the airborne vehicle (20).

4. The system of any one of claims 1 to 3,
**characterised in that** the set (4) of transmit antennas and the set (5) of receive antennas are patch antenna arrays (45, 55) that follow the shape of the airborne vehicle (20).

5. The system according to claim 4,
**characterised in that** the arrays of transmit and receive antennas are decoupled and are associated by switching with the FMCW waveforms for realizing the SAR imaging and with the CW waveform for measuring the Doppler effect along the axes of the antennas.

6. The system according to any of claims 4 and 5,
**characterised in that** the array of receive ventral antenna is split into two subarrays (531, 532) forming two lobes (L531, L532) so as to construct ways Σ and Δ whose processing operation provides the incidence (α) of the airborne vehicle (20).

7. The system according to any one of claims 4 to 6,
**characterised in that** the patch arrays have a low secondary lobe level pattern so as to resist jamming in threat directions.

8. The system according to any one of the preceding claims,
**characterised in that** it is configured to operate in sequence according to the nature of the ground.

9. The system according to any one of the preceding claims,
**characterised in that** it is configured to operate in at least one portion of the SHF microwave range.

10. The system according to claim 9,
**characterised in that** it is configured to operate in the bands C, X and Ku.

11. The system according to any of claims 9 and 10,
**characterised in that** the microwave transmit and receive modules are made of monolithic components or monolithic microwave integrated circuits MMIC made of gallium arsenide or gallium nitride.

12. The system according to any one of the preceding claims,
**characterised in that** the processing operation algorithms of the signal processor (9) are implemented on a programmable logic circuit of the FPGA type.

13. The system according to any one of the preceding claims,
**characterised in that** it comprises a clock generator (11) configured to synchronize at least the waveforms, the digitization and the processing operation of the signals of the signal processor (9).

14. The system according to any one of the preceding claims,
**characterised in that** it comprises a microcontroller (12) configured to realize at least some of the following functions: at least one configuration, at least one control and at least one supervision of elements of said system (10).

15. The system according to any one of the preceding claims,
**characterised in that** it is configured to realize, from remarkable points of the SAR images associated with a position prediction obtained from the velocity vector, a readjustment of the airborne vehicle (20) with respect to the ground (S).
